# EUROPÄISCHE PATENTSCHRIFT

(11) **EP 3 286 524 B1**
(45) Veröffentlichungstag und Bekanntmachung des Hinweises auf die Patenterteilung: **10.07.2019**
(21) Anmeldenummer: 15721589.8
(22) Anmeldetag: 21.04.2015
(51) Int. Cl.: G01B 21/04, G05B 19/19

(54) **VERFAHREN UND VORRICHTUNG ZUM BESTIMMEN VON DIMENSIONELLEN IST-EIGENSCHAFTEN EINES MESSOBJEKTS**
METHOD AND DEVICE FOR DETERMINING ACTUAL DIMENSIONAL PROPERTIES OF A MEASURED OBJECT
PROCÉDÉ ET DISPOSITIF PERMETTANT DE DÉTERMINER LES PROPRIÉTÉS DIMENSIONNELLES EFFECTIVES D'UN OBJET À MESURER

(43) Veröffentlichungstag der Anmeldung: 28.02.2018
(73) Patentinhaber: Carl Zeiss Industrielle Messtechnik GmbH, 73447 Oberkochen (DE)
(72) Erfinder: GEORGI, Bernd, 73447 Oberkochen (DE); WANNER, Josef, 73447 Oberkochen (DE); FRÖWIS, Roland, 73447 Oberkochen (DE); LETTENBAUER, Hubert, 73457 Essingen (DE)
(74) Vertreter: Witte, Weller & Partner Patentanwälte mbB
(86) Internationale Anmeldenummer: PCT/EP2015/058607
(87) Internationale Veröffentlichungsnummer: WO 2016/169589

(56) Entgegenhaltungen:
- DE-A1- 19 529 547
- DE-A1-102011 000 088
- DE-A1-102013 101 931
- US-A1- 2011 264 402

## Beschreibung

Die vorliegende Erfindung betrifft ein Verfahren und eine Vorrichtung zum Bestimmen von dimensionellen Ist-Eigenschaften eines Messobjekts, das eine Vielzahl von Geometrieelementen besitzt.

EP 2 738 515 A1 offenbart ein typisches Beispiel einer solchen Vorrichtung in Form eines Koordinatenmessgerätes. Das bekannte Koordinatenmessgerät besitzt eine Werkstückaufnahme und eine CCD Kamera, die in drei orthogonalen Raumrichtungen relativ zu der Werkstückaufnahme verfahrbar ist. Die CCD Kamera ist Teil eines Messkopfes, mit dessen Hilfe die Position von ausgewählten Messpunkten an einem Messobjekt relativ zu einem Referenzkoordinatensystem bestimmt werden kann. Üblicherweise werden mit einer solchen Vorrichtung Messpunktkoordinaten für eine Vielzahl von Messpunkten an einem Messobjekt bestimmt. Anhand dieser Messpunktkoordinaten lassen sich dann dimensionelle Ist-Eigenschaften des Messobjekts bestimmen, wie etwa der Durchmesser einer Bohrung oder der Abstand zwischen zwei Kanten an dem Messobjekt.

Prinzipiell ist es möglich, die Bewegungen des Messkopfes relativ zu dem Messobjekt und die Aufnahme der Messwerte von Hand zu steuern. Bei der Qualitätskontrolle von industriell hergestellten Produkten ist jedoch ein automatisierter Messablauf wünschenswert, so dass eine Vielzahl von typgleichen Messobjekten möglichst schnell und reproduzierbar gemessen werden können. Die Erstellung eines automatisierten Messablaufs erfordert grundlegende Kenntnisse über die Funktionsweise von Koordinatenmessgeräten sowie Erfahrung, wie verschiedene geometrische Elemente an einem Messobjekt am besten gemessen werden können. Darüber hinaus kann ein optimaler Messablauf in Abhängigkeit davon variieren, welche Art von Messkopf und/oder welche Bewegungsachsen an einem Koordinatenmessgerät zur Verfügung stehen. So kann ein Messkopf mit einem berührungslosen Sensor, wie etwa bei dem Koordinatenmessgerät aus EP 2 738 515 A1, einen anderen Messablauf erfordern als beispielsweise ein taktiler Messkopf, d.h. ein Messkopf mit einem Tastelement, das dazu ausgebildet ist, ausgewählte Messpunkte an dem Messobjekt zu berühren.

EP 2 738 515 A1 schlägt vor, zusätzlich zu der CCD Kamera am Messkopf noch eine Weitwinkel-Überwachungskamera zu verwenden. Die Weitwinkel-Überwachungskamera ist dazu ausgebildet, ein Bild von dem gesamten Messobjekt aus der Vogelperspektive aufzunehmen. Dieses (weitere) Bild wird auf der Anzeige eines Bedienerterminals dargestellt, um dem Bediener die Erstellung eines automatisierten Messablaufs unter Berücksichtigung und Vermeidung von möglichen Kollisionen zwischen Messkopf und Messobjekt zu erleichtern. Darüber hinaus bietet die Vorrichtung aus EP 2 738 515 A1 jedoch keine weitergehende Unterstützung bei der Erstellung eines Messablaufs und der Bediener benötigt folglich tiefgreifende Kenntnisse und Erfahrungen, um einen optimalen Messablauf für ein spezifisches Messobjekt zu erstellen.

Die Carl Zeiss Industrielle Messtechnik GmbH bietet unter der Bezeichnung CALYPSO eine Software zur Erstellung eines automatischen Messablaufs und zur Verarbeitung der erhaltenen Messergebnisse an. Die Grundlagen von CALYPSO sind beispielsweise in einer Broschüre mit dem Titel *"Einfach Messen und was Sie dazu wissen sollten* - *Eine Fibel der Messtechnik"* (Bestellnummer bei Carl Zeiss: 61212-2400101) oder in einer Werbebroschüre der Carl Zeiss Industrielle Messtechnik GmbH mit dem Titel *"Calypso. Einfach programmieren"* (Publikationsnummer 60-11-068) beschrieben. Die Erstellung des Messablaufs mit CALYPSO erfolgt anhand von so genannten Prüfmerkmalen. Ein Prüfmerkmal repräsentiert eine dimensionelle Ist-Eigenschaft eines oder mehrerer geometrischer Elemente (sogenannte Messelemente) an einem Messobjekt, wie etwa den Durchmesser einer Bohrung, die Rundheit eines Zylinderabschnitts oder der relative Abstand von zwei solchen Geometrieelementen. Um ein Prüfmerkmal zu quantifizieren, müssen in der Regel mehrere Messpunkte an einem oder mehreren Geometrieelementen erfasst werden. Mit der Auswahl eines Prüfmerkmals erstellt CALYPSO Steuerbefehle, mit denen der Messkopf zum Messen der benötigten Messpunkte automatisch gesteuert werden kann. Durch die Orientierung an Prüfmerkmalen erleichtert CALYPSO einem Bediener die Erstellung des Messablaufs, weil die Prüfmerkmale in der Regel mit Angaben korrespondieren, die der Bediener einer technischen Zeichnung des Messobjekts entnehmen kann.

Zum Erstellen des automatischen Messablaufs muss der Anwender die gewünschten Prüfmerkmale der Reihe nach anhand von CAD-Daten festlegen und konfigurieren und in diesem Zusammenhang diverse Parameter einschließlich Parametern für die Maschinenbewegungen wählen. CALYPSO bietet zu diesem Zweck jeweils Defaultwerte an, die sich für eine große Zahl an Messaufgaben bewährt haben, aber ein erfahrener Anwender kann die Defaultwerte ändern, um den automatischen Messablauf in Bezug auf eine spezielle Messaufgabe zu optimieren.

Allerdings kann die Änderung eines Parameters bei der Konfiguration der Messwertaufnahme für ein erstes Prüfmerkmal Auswirkungen auf die Messgenauigkeit und/oder Messgeschwindigkeit bei der Messwertaufnahme für ein anderes Prüfmerkmal haben, da beispielsweise Maschinenvibrationen und/oder Anfahrwege in Abhängigkeit von den Bewegungsparametern für das erste Prüfmerkmal variieren können. Die Erstellung eines optimalen Messablaufs für eine Vielzahl von Prüfmerkmalen ist daher sehr zeitaufwändig und erfordert ein erhebliches Fachwissen und Erfahrung auf Seiten des Anwenders.

Völlig unabhängig von den Problemen und Schwierigkeiten bei der Erstellung eines Messablaufs gibt es unter der Bezeichnung "Virtual CMM" ein Softwaretool, das unter Federführung der Physikalisch-Technischen Bundesanstalt (PTB), dem nationalen deutschen Metrologie-Institut entwickelt wurde, um die Messunsicherheit einer Messung mit einem Koordinatenmessgerät auf Basis von statistischen Methoden zu bestimmen. Ein Überblick über das Softwaretool Virtual CMM findet sich beispielsweise in der Publikation *"The, Virtual CMM'a software tool for uncertainty evaluation* - *practical application in an accredited calibration lab"* von der Firma Feinmess GmbH & Co. KG und der PTB.

DE 10 2011 000088 A1 offenbart ein Verfahren und eine Vorrichtung zum Bestimmen von dimensionellen Ist-Eigenschaften eines Messobjektes, wobei ein Messablauf computerunterstützt erstellt wird. Dabei wird zunächst ein erster Messablauf mit ersten Steuerbefehlen erstellt, der anschließend modifiziert wird, um einen zweiten Messablauf mit zweiten Steuerbefehlen zu erhalten, die sich von den ersten Steuerbefehlen zumindest teilweise unterscheiden. Der letztlich zur Messung verwendete zweite Messablauf ergibt sich also aus der Modifikation eines ersten Entwurfs, wobei die Modifikation anhand eines Optimierungskriteriums erfolgt.

DE 296 03 273 U1 offenbart ein Verfahren und eine Vorrichtung entsprechend dem jeweiligen Oberbegriff der Ansprüche 1 und 13 insoweit, als dass ein Anwender hier eine von mehreren möglichen Parameterkombinationen für eine Messaufgabe über Schaltflächen auf einer Bedienoberfläche auswählen kann. Die alternativen Parameterkombinationen unterscheiden sich u.a. in Bezug auf die Messgeschwindigkeit. Eine aus der gewählten Parameterkombination resultierende Messunsicherheit wird dem Anwender angezeigt und die Parameterkombination kann vom Anwender abgeändert werden.

EP 2 735 843 A1 offenbart ein Messverfahren und eine Vorrichtung, wobei ein Messablauf computergestützt erstellt wird. Ein Anwender wählt die zu messenden Merkmale aus. Anschließend wählt ein Optimierungsalgorithmus für jedes Merkmal die passenden Parameter. Der Optimierungsalgorithmus arbeitet in Abhängigkeit von Dimensionen und Toleranzen der zu vermessenden Werkstücke. Vor diesem Hintergrund ist es eine Aufgabe der vorliegenden Erfindung, ein Verfahren und eine Vorrichtung der eingangs genannten Art anzugeben, die auf einfache und schnelle Weise die Bestimmung von dimensionellen Ist-Eigenschaften eines Messobjekts, insbesondere eines Serienteils aus einer industriellen Produktion, mit einer erhöhten Effizienz, Genauigkeit und/oder Vergleichbarkeit zu anderen Messungen eines typgleichen Messobjekts ermöglichen.

Gemäß einem ersten Aspekt der Erfindung wird diese Aufgabe durch ein Verfahren der eingangs genannten Art gelöst, mit folgenden Schritten:
- Bereitstellen eines Koordinatenmessgerätes mit einem Messkopf zum Aufnehmen von Messwerten, die eine Position von zumindest einem Messpunkt an dem Messobjekt repräsentieren,
- Bereitstellen von Solldaten, die Soll-Eigenschaften für die Vielzahl von Geometrieelementen des Messobjekts repräsentieren, wobei die Soll-eigenschaften akzeptable Fertigungstoleranzen für die Geometrieelemente beinhalten,
- computerunterstütztes Erstellen eines Messablaufs, der Bewegungen des Messkopfes relativ zu dem Messobjekt und die Aufnahme von Messwerten an definierten Messkopfpositionen relativ zu dem Messobjekt festlegt, wobei definierte Geometrieelemente aus der Vielzahl von Geometrieelementen ausgewählt werden und Prüfmerkmale zu den definierten Geometrieelementen in Abhängigkeit von den Solldaten festgelegt werden, und wobei Steuerbefehle zum Steuern des Messkopfes relativ zu den definierten Geometrieelementen in Abhängigkeit von den Prüfmerkmalen festgelegt werden,
- Aufnehmen von individuellen Messwerten an dem Messobjekt mit Hilfe des Messkopfes, wobei der Messkopf in Abhängigkeit von den Steuerbefehlen gesteuert wird, und
- Bestimmen von Zahlenwerten in Abhängigkeit von den individuellen Messwerten, wobei die ersten Zahlenwerte dimensionelle Ist-Eigenschaften des Messobjekts repräsentieren, die den Prüfmerkmalen entsprechen,
wobei zunächst ein erster Messablauf computerunterstützt erstellt wird, der erste Steuerbefehle festlegt, und wobei der erste Messablauf vor dem Aufnehmen der individuellen Messwerte computerunterstützt modifiziert wird, um einen zweiten Messablauf mit zweiten Steuerbefehlen zu erhalten, wobei sich die zweiten Steuerbefehle zumindest teilweise von den ersten Steuerbefehlen unterscheiden, wobei der Messkopf zum Aufnehmen der individuellen Messwerte in Abhängigkeit von den zweiten Steuerbefehlen gesteuert wird, wobei die zweiten Steuerbefehle computerunterstützt so gewählt werden, dass die Zahlenwerte jeweils eine definierte Messunsicherheit aufweisen, die um einen definierten Betrag kleiner ist als die akzeptablen Fertigungstoleranzen für die Geometrieelemente, wobei die definierte Messunsicherheit in Abhängigkeit von den ersten Steuerbefehlen ermittelt wird (90), wobei der erste Messablauf in Abhängigkeit von der ermittelten Messunsicherheit modifiziert wird (92), und wobei die zweiten Steuerbefehle so gewählt werden, dass die definierte Messunsicherheit für zumindest eines der Prüfmerkmale (56, 58, 60, 62, 64) erhöht wird, während die definierte Messunsicherheit für zumindest ein anderes Prüfmerkmal beibehalten oder verringert wird.

Gemäß einem weiteren Aspekt der Erfindung wird diese Aufgabe durch eine Vorrichtung der eingangs genannten Art gelöst, mit einer Werkstückaufnahme zum Halten des Messobjekts, mit einem Messkopf, der relativ zu der Werkstückaufnahme verfahrbar ist und zum Aufnehmen von Messwerten ausgebildet ist, die eine Position von zumindest einem Messpunkt an dem Messobjekt repräsentieren, mit einer Auswerte- und Steuereinheit, die den Messkopf in Abhängigkeit von einem definierten Messablauf relativ zu der Werkstückaufnahme verfährt, und mit einer Schnittstelle zum Zuführen von Solldaten, die Soll-Eigenschaften für die Vielzahl von Geometrieelementen des Messobjekts repräsentieren, wobei die Solleigenschaften akzeptable Fertigungstoleranzen für die Geometrieelemente beinhalten, wobei die Auswerte- und Steuereinheit dazu ausgebildet ist, ein computerunterstütztes Erstellen eines Messablaufs zu ermöglichen, der Bewegungen des Messkopfes relativ zu dem Messobjekt und die Aufnahme von Messwerten an definierten Messkopfpositionen relativ zu dem Messobjekt festlegt, wobei definierte Geometrieelemente aus der Vielzahl von Geometrieelementen ausgewählt und Prüfmerkmale zu den definierten Geometrieelementen in Abhängigkeit von den Solldaten festgelegt werden können, und wobei Steuerbefehle zum Steuern des Messkopfes relativ zu den definierten Geometrieelementen in Abhängigkeit von den Prüfmerkmalen festgelegt werden können, wobei die Auswerte- und Steuereinheit ferner dazu ausgebildet ist, den Messkopf in Abhängigkeit von den Steuerbefehlen zu steuern, um individuelle Messwerte an dem Messobjekt aufzunehmen, und Zahlenwerte in Abhängigkeit von den individuellen Messwerten zu bestimmen, wobei die ersten Zahlenwerte dimensionelle Ist-Eigenschaften des Messobjekts repräsentieren, die den Prüfmerkmalen entsprechen, wobei die Auswerte- und Steuereinheit ferner dazu ausgebildet ist, zunächst einen ersten Messablauf zu erstellen, der erste Steuerbefehle zum Steuern des Messkopfes relativ zu dem Messobjekt festgelegt, und den ersten Messablauf vor dem Aufnehmen der individuellen Messwerte zu modifizieren, um einen zweiten Messablauf mit zweiten Steuerbefehle zu erhalten, wobei sich die zweiten Steuerbefehle zumindest teilweise von den ersten Steuerbefehlen unterscheiden, wobei die Auswerte- und Steuereinheit dazu ausgebildet ist, den Messkopf zum Aufnehmen der individuellen Messwerte in Abhängigkeit von den zweiten Steuerbefehlen zu steuern, und wobei die zweiten Steuerbefehle so gewählt sind, dass die Zahlenwerte jeweils eine definierte Messunsicherheit aufweisen, die um einen definierten Betrag kleiner ist als die akzeptablen Fertigungstoleranzen für die Geometrieelemente, wobei die Auswerte- und Steuereinheit dazu ausgebildet ist, die definierte Messunsicherheit in Abhängigkeit von den ersten Steuerbefehlen zu ermitteln und den ersten Messablauf in Abhängigkeit von der ermittelten Messunsicherheit zu modifizieren, wobei die zweiten Steuerbefehle computerunterstützt so gewählt sind, dass die definierte Messunsicherheit für zumindest eines der Prüfmerkmale erhöht ist, während die definierte Messunsicherheit für zumindest ein anderes Prüfmerkmal beibehalten oder verringert ist

Besonders vorteilhaft ist es, wenn die vorliegende Erfindung mit Hilfe eines Computerprogramms mit Programmcode realisiert wird, der dazu ausgebildet ist, das vorgenannte Verfahren auszuführen, wenn der Programmcode auf einer Auswerte- und Steuereinheit eines Koordinatenmessgerätes ausgeführt wird.

Das neue Verfahren und die entsprechende Vorrichtung verwenden erstmals die Messunsicherheit einer Messung als Kriterium, um einen Messablauf für eine automatisierte Messung an einem Messobjekt zu optimieren. Die definierte Messunsicherheit wird in Abhängigkeit von den ersten Steuerbefehlen (vorzugsweise rechnerisch als Zahlenwert) ermittelt und der erste Messablauf wird in Abhängigkeit von der ermittelten Messgenauigkeit modifiziert. Dementsprechend wird zunächst ein erster, gewissermaßen provisorischer Messablauf erstellt, der in einem zweiten Schritt unter Berücksichtigung der zu erwartenden Messunsicherheit modifiziert wird, bis ein auf die Messunsicherheit bezogenes Kriterium erreicht ist. Erst der modifizierte Messablauf wird für die Aufnahme der individuellen Messwerte verwendet. Dabei werden die zweiten Steuerbefehle des modifizierten Messablaufs so gewählt, dass für jedes Prüfmerkmal eine individuelle definierte Messunsicherheit erreicht wird, die um einen definierten Betrag kleiner ist als die akzeptablen Fertigungstoleranzen genau derjenigen Geometriemerkmale, die mit dem jeweiligen Prüfmerkmal zusammenhängen. Mit anderen Worten bezieht sich das Optimierungskriterium individuell auf jedes ausgewählte Prüfmerkmal und/oder Geometrieelement.

Die zweiten Steuerbefehle werden so gewählt, dass die definierte Messunsicherheit für zumindest eines der Prüfmerkmale erhöht wird, während die definierte Messunsicherheit für zumindest ein anderes Prüfmerkmal beibehalten oder gar verringert wird. Dementsprechend werden die zweiten Steuerbefehle so gewählt, dass die definierte Messunsicherheit für verschiedene Prüfmerkmale unterschiedlich ausfällt und für zumindest eines dieser Prüfmerkmale im Rahmen der Modifikation des Messablaufs erhöht wird. Diese Ausgestaltung erscheint recht ungewöhnlich, da eine erhöhte Messunsicherheit mit einer geringeren Messgenauigkeit einhergeht. Die Erhöhung der Messunsicherheit für einzelne Prüfmerkmale ermöglicht jedoch eine Steigerung der Effizienz und des Durchsatzes. Man erhält auf diese Weise einen modifizierten zweiten Messablauf, der verschiedene definierte Messunsicherheiten für verschiedene Prüfmerkmale an dem Messobjekt realisiert. Infolgedessen kann eine hohe Messgenauigkeit und eine hohe Messgeschwindigkeit in besonders vorteilhafter Weise miteinander kombiniert werden.

Da sich zumindest einige Steuerbefehle in dem modifizierten zweiten Messablauf von den entsprechenden Steuerbefehlen in dem ersten Messablauf unterscheiden, erfolgt die Aufnahme der individuellen Messwerte mit Bewegungen des Messkopfes (relativ zu dem Messobjekt), die anders sind als ursprünglich auf Basis der ersten Steuerbefehle konfiguriert wurde. Beispielsweise kann der Messkopf in einem bestimmten Abschnitt des Messablaufs schneller oder langsamer bewegt werden, als dies mit den ersten Steuerbefehlen vorgesehen war. Alternativ oder ergänzend kann der Messkopf entlang einer geänderten Bahnkurve bewegt werden, es kann eine höhere oder niedrigere Anzahl an Messpunkten gemessen werden und/oder es wird im Rahmen des modifizierten zweiten Messablaufs ein veränderter Messkopf, beispielsweise eine andere Taststiftkombination eingesetzt.

Die Modifikation und die damit verbundene Optimierung des Messablaufs erfolgt nicht allein anhand von individuellen Kenntnissen und Erfahrungen des Anwenders, sondern gezielt anhand eines objektivierten, quantifizierbaren Kriteriums, nämlich der jeweils erreichbaren Messunsicherheit, die sich aufgrund der modifizierten Konfiguration des Messablaufs verändert. Es ist beispielsweise leicht einzusehen, dass die Messunsicherheit bei sehr schnellen Bewegungen des Messkopfes relativ zu dem Messobjekt typischerweise größer sein wird als bei sehr langsamen Bewegungen. Andererseits gehen sehr langsame Bewegungen des Messkopfes zu Lasten des Durchsatzes und der Effizienz. Die Verwendung von verschiedenen Taststiftkombinationen kann ebenfalls Auswirkungen auf die Messunsicherheit haben, etwa weil ein langer und dünner Taststift ein präziseres Antasten von filigranen Strukturen ermöglicht, aber labiler und vibrationsempfindlicher ist als ein kurzer dicker Taststift. Somit kann der Wechsel auf ein anderes oder modifiziertes Tastersystem sinnvoll sein, obwohl ein solcher Wechsel Zeit kostet. Auch der Wechsel von einem Sensorprinzip zu einem anderen, also etwa ein Wechsel von einem taktilen Sensor zu einem berührungslosen Sensor, hat Auswirkungen auf die erreichbare Messunsicherheit und kann in Abhängigkeit von der konkreten Messaufgabe sinnvoll sein oder auch nicht.

Das neue Verfahren und die entsprechende Vorrichtung nutzen die erreichbare Messunsicherheit als ein objektives, von persönlichen Erfahrungen eines Anwenders weitgehend unabhängiges Optimierungskriterium, indem der erste Messablauf gezielt so modifiziert wird, dass eine definierte Messunsicherheit in Bezug auf die akzeptablen Fertigungstoleranzen für die Geometrieelemente erreicht wird. In bevorzugten Ausführungsbeispielen ist die Auswerte- und Steuereinheit dazu ausgebildet, dem Anwender die Vorgabe der definierten Messunsicherheit zu ermöglichen, insbesondere in Form einer Prozentangabe bezogen auf die Fertigungstoleranzen für die Geometrieelemente. Beispielsweise kann die definierte Messunsicherheit 20 % der akzeptablen Fertigungstoleranzen betragen und der erste Messablauf, der mit Defaultwerten erstellt wird, wird im zweiten Schritt so modifiziert, dass die vorgegebene Messunsicherheit für einzelne ausgewählte Messelemente und/oder Prüfmerkmale oder gar für den gesamten Messvorgang erreicht wird. Vorzugsweise liegt die definierte Messunsicherheit in einer Größenordnung zwischen 10 % und 50 % der akzeptablen Fertigungstoleranzen, vorzugsweise nicht höher als 25% und besonders bevorzugt bei etwa 20% der akzeptablen Fertigungstoleranzen. Des Weiteren ist es bevorzugt, wenn die definierte Messunsicherheit als Optimierungskriterium in Abhängigkeit von ausgewählten Messelementen und/oder Prüfmerkmalen variiert. Beispielsweise kann die definierte Messunsicherheit als Zielvorgabe also für ein erstes Messelement 20% von der akzeptablen Fertigungstoleranz für dieses Messelement betragen, während die definierte Messunsicherheit für ein anderes (zweites) Messelement 30% von der akzeptablen Fertigungstoleranz beträgt.

Das neue Verfahren und die entsprechende Vorrichtung vereinfachen die Erstellung eines optimierten Messablaufs anhand eines objektiven Zielkriteriums. Infolgedessen können auch weniger erfahrene Anwender einen optimierten Messablauf für eine bestimmte Messung erstellen. Gleichermaßen kann ein erfahrener Anwender schneller und zielgerichteter zu einem optimierten Messablauf kommen. Je nach den akzeptablen Fertigungstoleranzen für das Messobjekt ermöglichen die zweiten Steuerbefehle eine schnellere Messung mit hinreichender Messgenauigkeit oder eine höhere Messgenauigkeit und/oder bessere Vergleichbarkeit der Messergebnisse. Die oben genannte Aufgabe ist daher vollständig gelöst.

Vorzugsweise wird die definierte Messunsicherheit mit Hilfe des Softwaretools Virtual CMM ermittelt, auf das weiter oben bereits hingewiesen wurde. Generell ist es bevorzugt, wenn die definierte Messunsicherheit mit Hilfe von statistischen Simulationen, beispielsweise unter Anwendung der Methoden einer Monte-Carlo-Simulation, ermittelt wird.

In dieser Ausgestaltung wird die definierte Messunsicherheit mit Hilfe von statistischen Methoden ermittelt, wobei der erste Messablauf mit den ersten Steuerbefehlen die Grundlage für die Bestimmung der Messunsicherheit bildet. Anschließend erfolgt die Modifikation des ersten Messablaufs und es wird erneut die definierte Messunsicherheit auf Basis des modifizierten Messablaufs ermittelt. Vorteilhaft wird dieses Verfahren iterativ solange ausgeführt, bis die definierte Messunsicherheit den für die Optimierung zugrunde gelegten Zielwert erreicht. Die Ausgestaltung besitzt den Vorteil, dass die Optimierung anhand einer quantifizierbaren und reproduzierbaren Zielgröße und anhand einer definierten Ausgangsbasis, nämlich den ersten Steuerbefehlen, erfolgt, was eine besonders gute Vergleichbarkeit der jeweiligen Messergebnisse ermöglicht.

In einer weiteren Ausgestaltung werden die zweiten Steuerbefehle daher anhand von mehreren Iterationsschritten bestimmt.

Diese Ausgestaltung ermöglicht ein "gezieltes Herantasten" an einen optimalen Messablauf und kann vergleichsweise einfach für eine Vielzahl von verschiedenen Koordinatenmessgerätetypen realisiert werden.

In einer weiteren Ausgestaltung werden die zweiten Steuerbefehle bestimmt, nachdem der erste Messablauf vollständig fertig gestellt wurde. Alternativ hierzu ist es grundsätzlich aber denkbar, den ersten Messablauf bereits zu modifizieren, bevor er vollständig fertig gestellt wurde, gewissermaßen also "on the fly"". Die vorliegende Ausgestaltung besitzt demgegenüber den Vorteil, dass die Optimierung den gesamten ersten Messablauf erfasst und somit Querbezüge und Abhängigkeiten über den gesamten Messablauf für die Optimierung berücksichtigt werden können.

In einer weiteren Ausgestaltung legen die ersten und zweiten Steuerbefehle jeweils Bewegungsparameter des Messkopfes relativ zu dem Messobjekt fest. Vorteilhaft werden die Bewegungsparameter bei der Modifizierung des ersten Messablaufs verändert, so dass die zweiten Steuerbefehle zu einem veränderten Bewegungsablauf des Messkopfes relativ zu dem Messobjekt im Vergleich zu dem ersten Messablauf führen. Insbesondere ist es von Vorteil, wenn die zweiten Steuerbefehle geänderte Bewegungsgeschwindigkeiten und/oder -beschleunigungen des Messkopfes relativ zu dem Messobjekt im Vergleich zu dem ersten Messablauf festlegen.

Diese Ausgestaltung ermöglicht eine sehr zielgerichtete Optimierung des Messablaufs in Bezug auf die gegensätzlichen Anforderungen nach einer hohen Messgenauigkeit und einer hohen Messgeschwindigkeit. Durch Modifikation der jeweiligen Bewegungsparameter kann recht schnell ein optimaler Kompromiss zwischen den gegensätzlichen Anforderungen erreicht werden. Entsprechend dem oben erläuterten Kern des neuen Verfahrens und der Vorrichtung erfolgen die Modifikationen der Bewegungsparameter jedoch nicht rein intuitiv, sondern gezielt im Hinblick auf die Erreichung einer definierten Messunsicherheit.

In einer weiteren Ausgestaltung wird eine erste Datenbank bereitgestellt, in der Geräteeigenschaften des Koordinatenmessgerätes hinterlegt sind, wobei die zweiten Steuerbefehle, insbesondere eine durch die zweiten Steuerbefehle festgelegte Bewegungsgeschwindigkeit des Messkopfes relativ zu dem Messobjekt, in Abhängigkeit von den Geräteeigenschaften bestimmt werden.

In dieser Ausgestaltung werden die individuellen Geräteeigenschaften des Koordinatenmessgerätes bei der Optimierung des Messablaufs vorteilhaft berücksichtigt. In einigen Ausführungsbeispielen beschränken sich die Geräteeigenschaften auf solche, die für den jeweiligen Typ des verwendeten Koordinatenmessgerätes charakteristisch sind, also beispielsweise für ein Koordinatenmessgerät in Portalbauweise im Unterschied zu einem Koordinatenmessgerät mit einer Säulen-/Ständer-Konstruktion. In bevorzugten Ausführungsbeispielen beinhalten die Geräteeigenschaften darüber hinaus individuelle Eigenschaften des jeweiligen Koordinatenmessgerätes, beispielsweise also die jeweiligen Kalibrierdaten.

Die Berücksichtigung der Geräteeigenschaften führt zu einem noch effizienteren zweiten Messablauf, da beispielsweise das Schwingungsverhalten eines Koordinatenmessgerätes in Horizontalarmbauweise anders ist als das Schwingungsverhalten eines Koordinatenmessgerätes in Portalbauweise. Dementsprechend unterscheiden sich auch die Messunsicherheiten, die mit den jeweiligen Gerätetypen bei ansonsten vergleichbaren Umgebungsbedingungen erreichbar sind. Da die Messunsicherheit nach dem neuen Verfahren und der entsprechenden Vorrichtung als Zielgröße für die Optimierung verwendet wird, führt die Berücksichtigung der Geräteeigenschaften zu besonders guten Ergebnissen.

In einer weiteren Ausgestaltung wird eine zweite Datenbank bereitgestellt, in der weitere Zahlenwerte hinterlegt sind, die dimensionelle Ist-Eigenschaften eines Referenzmessobjekts repräsentieren, wobei die zweiten Steuerbefehle in Abhängigkeit von den weiteren Zahlenwerten bestimmt werden.

In einigen Varianten dieser Ausgestaltung ist das Referenzmessobjekt ein typgleiches Messobjekt, das auf einem Referenz-Koordinatenmessgerät mit einer besonders hohen Genauigkeit, etwa unter Laborbedingungen mit definierter Messraumtemperatur gemessen wurde. In anderen Varianten kann das Referenzmessobjekt ein typgleiches Messobjekt sein, das auf einem Koordinatenmessgerät eines anderen Typs, etwa mit einem anderen Sensor gemessen wurde. Die Berücksichtigung dieser Referenz-Messergebnisse bei der Modifikation des ersten Messablaufs führt zu einem in Bezug auf die Vergleichbarkeit optimierten zweiten Messablauf. Die Ausgestaltung ist besonders vorteilhaft im Hinblick auf die Rückführung der Messergebnisse auf ein zertifiziertes Referenznormal.

In einer weiteren Ausgestaltung wird der Messkopf zum Aufnehmen der Messwerte mit einer definierten Sensoranordnung bestückt, die in Abhängigkeit von der definierten Messunsicherheit bestimmt wird.

In dieser Ausgestaltung beinhaltet die Modifikation des ersten Messablaufs eine Modifikation des Messkopfes und insbesondere eine Modifikation der jeweils verwendeten Sensoranordnung. Mit anderen Worten beinhaltet diese Ausgestaltung, dass die im Rahmen des zweiten Messablaufs verwendete Sensoranordnung in Abhängigkeit von der jeweils erreichbaren Messunsicherheit als Zielgröße ausgewählt wird. Die Ausgestaltung besitzt den Vorteil, dass mit einer Variation der Sensoranordnung sehr große Veränderungen in Bezug auf die Messunsicherheit erreicht werden können, weshalb diese Ausgestaltung eine sehr schnelle Optimierung ermöglicht. Andererseits profitiert diese Ausgestaltung von den Vorteilen des neuen Verfahrens und der Vorrichtung, da mit der definierten Messunsicherheit eine quantifizierbare Zielgröße für die Modifikation der Sensoranordnung bereitgestellt wird. Besonders vorteilhaft ist es, wenn im Rahmen dieser Ausgestaltung eine in Bezug auf die Messunsicherheit optimierte Tasteranordnung für einen taktilen Sensor zielgerichtet ausgewählt wird.

In einer weiteren Ausgestaltung werden die zweiten Steuerbefehle ferner so gewählt, dass der zweite Messablauf eine definierte Messzeit bewirkt. Vorzugsweise wird eine erste Messzeit auf Basis der ersten Steuerbefehle ermittelt, insbesondere in einer computergestützten Simulation, und es wird eine Differenz zwischen der ersten Messzeit und einer definierten Zielzeit bestimmt. Die zweiten Steuerbefehle werden dann so gewählt, dass diese Differenz minimal ist.

Beim Messen im Fertigungsumfeld spielt neben der Messgenauigkeit die Messzeit, d.h. die für die Aufnahme der Messwerte benötigte Zeit, eine wichtige Rolle. Dementsprechend führt die Erstellung des Messablaufs unter Berücksichtigung einer definierten Messzeit als objektivem Zielkriterium zu noch weiter optimierten Ergebnissen. Es findet eine Performanceoptimierung hinsichtlich Zielzeit und geforderter Genauigkeit statt.

In einer weiteren Ausgestaltung werden die zweiten Steuerbefehle ferner in Abhängigkeit von einer individuellen Nutzerfreigabe gewählt.

In dieser Ausgestaltung sind die Modifikationen des ersten Messablaufs abhängig von einer jeweiligen Zustimmung des Anwenders, der den ersten und modifizierten zweiten Messablauf erstellt. Die Ausgestaltung beinhaltet somit eine interaktive Optimierung. Die Modifikationen sind für den jeweiligen Anwender gut nachvollziehbar, was besonders vorteilhaft ist für eine gute Vergleichbarkeit der Messergebnisse mit anderen Messergebnissen an typgleichen Messobjekten.

In einer weiteren Ausgestaltung werden der erste und/oder zweite Messablauf mit Hilfe von Spracheingaben erstellt.

In dieser Ausgestaltung verwenden die neue Vorrichtung und das neue Verfahren ein Softwaretool zur Spracherkennung. Die Ausgestaltung ermöglicht ein sehr komfortables und schnelles Editieren und Modifizieren eines erstellten Messablaufs, insbesondere in Kombination mit einer individuellen Nutzerfreigabe.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Ausführungsbeispiel der neuen Vorrichtung, mit der das neue Verfahren ausgeführt werden kann;
- Figur 2: eine bildliche Darstellung eines Messobjekts zur Erläuterung des neuen Verfahrens;
- Figur 3: die bildliche Darstellung des Messobjekts aus Fig. 2, wobei ein erstes Geometrieelement selektiert ist;
- Figur 4: die bildliche Darstellung des Messobjekts aus Fig. 2 mit zwei selektierten Geometrieelementen;
- Figur 5: die bildliche Darstellung des Messobjekts aus Fig. 2 mit mehreren selektierten Prüfmerkmalen; und
- Figur 6: ein Flussdiagramm zur Erläuterung eines Ausführungsbeispiels des neuen Verfahrens.

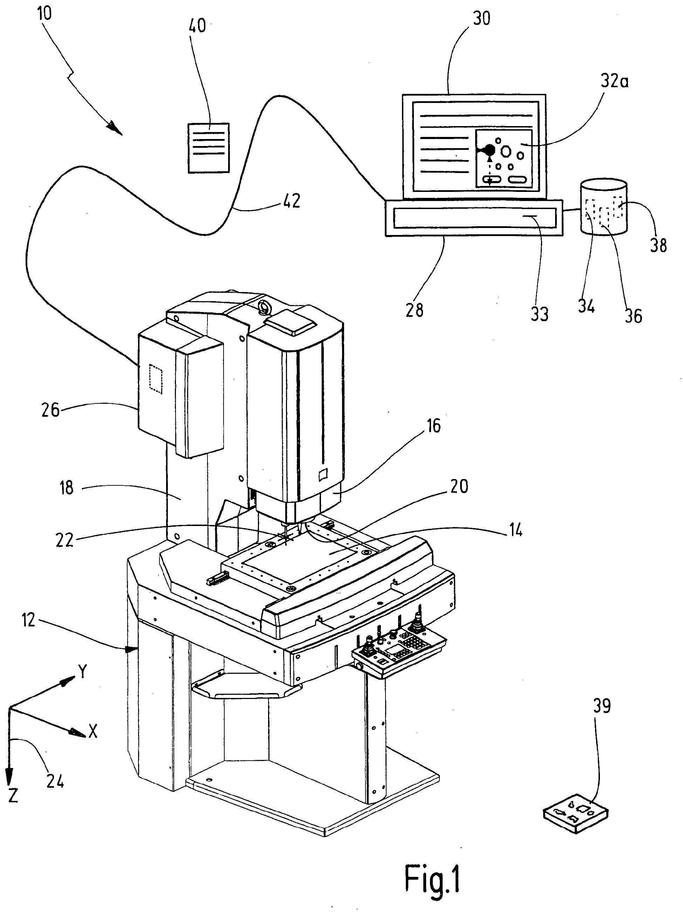

In Fig. 1 ist eine Vorrichtung, die nach dem neuen Verfahren arbeitet, in ihrer Gesamtheit mit der Bezugsziffer 10 bezeichnet.

Die Vorrichtung 10 beinhaltet ein Koordinatenmessgerät 12 mit einer Werkstückaufnahme 14 (hier in Form eines x-y-Kreuztisches) und einem Messkopf 16. Der Messkopf 16 ist an einer Säule 18 angeordnet und kann hier relativ zu der Werkstückaufnahme 14 in vertikaler Richtung entlang der Säule 18 verfahren werden. Üblicherweise wird diese Bewegungsachse als z-Achse bezeichnet. Die Werkstückaufnahme 14 kann relativ zu dem Messkopf 16 in zwei orthogonalen Richtungen verfahren werden, die üblicherweise als x- und y-Achse bezeichnet werden. Insgesamt kann der Messkopf 16 hier also in drei orthogonalen Raumrichtungen relativ zu der Werkstückaufnahme 14 verfahren werden, um eine Messung an einem Messobjekt (hier nicht dargestellt) durchzuführen. Die drei orthogonalen Raumrichtungen x, y, z spannen hier ein Maschinenkoordinatensystem auf, das in einigen Ausführungsbeispielen als Referenzkoordinatensystem für die Messpunktkoordinaten dient.

Es sind im Stand der Technik andere Konstruktionen für Koordinatenmessgeräte bekannt, beispielsweise Koordinatenmessgeräte in Portal- oder Brückenbauweise. Die neue Vorrichtung und das neue Verfahren sind nicht auf eine bestimmte Konstruktion der Bewegungsachsen beschränkt, so dass anstelle des Koordinatenmessgerätes 12 auch ein Koordinatenmessgerät verwendet sein kann, bei dem die Bewegung des Messkopfes 16 relativ zu der Werkstückaufnahme 14 auf andere Weise realisiert ist. Prinzipiell kann die Bewegung des Messkopfes 16 relativ zu der Werkstückaufnahme 14 auf weniger als drei Bewegungsachsen beschränkt sein oder der Messkopf 16 und/oder die Werkstückaufnahme 14 könnten weitere Bewegungsachsen, wie etwa Drehachsen, besitzen.

Der Messkopf 16 besitzt in diesem Ausführungsbeispiel einen optischen Sensor 20, mit dem ein Messobjekt (hier nicht dargestellt) berührungslos gemessen werden kann. In einigen Ausführungsbeispielen beinhaltet der optische Sensor 20 eine Kamera und ein Objektiv, um ein Bild von dem Messobjekt aufzunehmen. Darüber hinaus besitzt das Koordinatenmessgerät 12 in diesem Ausführungsbeispiel noch einen taktilen Sensor 22 mit einer sternförmigen Anordnung von Taststiften, mit denen Messpunkte an einem Messobjekt berührt werden können, um eine Messung durchzuführen.

Das Koordinatenmessgerät 12 zeigt hier ein bevorzugtes Ausführungsbeispiel der neuen Vorrichtung und des neuen Verfahrens. In anderen Ausführungsbeispielen kann die Vorrichtung einen anderen Messkopf aufweisen, etwa nur einen taktilen Messkopf oder nur einen optischen Messkopf. Prinzipiell könnte der Messkopf 16 auch einen kapazitiv messenden Sensor beinhalten oder beispielsweise ein nach dem Röntgenprinzip arbeitender Messkopf sein. In allen bevorzugten Ausführungsbeispielen liefert der Messkopf Messwerte, die die Position von zumindest einem Messpunkt an dem Messobjekt relativ zu einem Koordinatenmesssystem 24 repräsentieren.

Das Koordinatenmessgerät 12 besitzt eine Steuereinheit 26, mit deren Hilfe die Antriebe (hier nicht bezeichnet) für die Werkstückaufnahme 14 und den Messkopf 16 angesteuert werden, um eine Messung durchzuführen. Des Weiteren nimmt die Steuereinheit 26 die Messwerte des Messkopfes16 auf und stellt sie zur weiteren Auswertung einer Auswerteeinheit 28 zur Verfügung. In dem dargestellten Ausführungsbeispiel ist die Auswerteeinheit 28 ein PC, auf dem eine Konfigurations- und Auswertesoftware ausgeführt wird, wie etwa die eingangs genannte Software CALYPSO, die nun allerdings um einige Fähigkeiten erweitert ist. Die Konfigurations- und Auswertesoftware ermöglicht einerseits die Erstellung eines Messablaufs zur Durchführung einer automatisierten Messung an einem Messobjekt nach dem neuen verfahren. Andererseits stellt die Auswertesoftware einem Bediener die quantifizierten Messergebnisse in geeigneter Weise zur Verfügung.

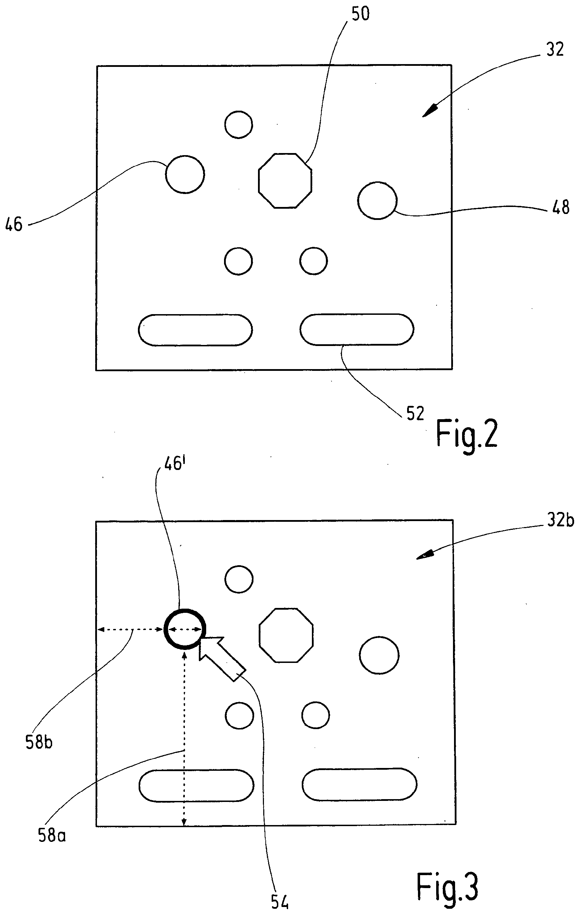

Die Auswerteeinheit 28 beinhaltet hier ein Bildanzeigegerät 30, auf dem unter anderem eine bildliche Darstellung 32a eines Messobjekts 32 (Fig. 2) angezeigt werden kann. In bevorzugten Ausführungsbeispielen ist die bildliche Darstellung 32a anhand von CAD-Daten des Messobjekts 32 erzeugt, wobei die CAD-Daten der Auswerteeinheit 28 über eine geeignete Schnittstelle 33, wie etwa eine USB-Schnittstelle oder ein Netzwerkanschluss, zugeführt sind.

Die Vorrichtung 10 besitzt einen Speicher mit einem ersten Speicherbereich, in dem die Solldaten 34 für das Messobjekt gespeichert sind. Die Solldaten können in einigen Ausführungsbeispielen den CAD-Daten entsprechen. Sie beinhalten hier Toleranzangaben für die einzelnen Geometrieelemente des Messobjekts, die akzeptable Fertigungstoleranzen repräsentieren.

In einem zweiten Speicherbereich sind individuelle Geräteeigenschaften 36 des Koordinatenmessgerätes 12 gespeichert. Die individuellen Geräteeigenschaften 36 kennzeichnen zumindest den Typ des Koordinatenmessgerätes und der verwendeten Sensoren 20, 22. In einigen bevorzugten Ausführungsbeispielen beinhalten die individuellen Geräteeigenschaften 36 Informationen über ein Sensormagazin (hier nicht dargestellt), in dem eine Vielzahl von Sensoren bereitgestellt sind. Bei der Konfiguration des Messablaufs können dann die im Sensormagazin zur Verfügung stehenden Sensoren ausgewählt werden. Ebenso kann hier bei der Erstellung des Messablaufs zwischen dem optischen Sensor 20 und dem taktilen Sensor 22 ausgewählt werden.

In einigen Ausführungsbeispielen beinhalten die individuellen Geräteeigenschaften 36 darüber hinaus Kalibrierdaten für das individuelle Koordinatenmessgerät 12 und die jeweiligen Sensoren 20, 22. Auch diese werden bei der Erstellung und Modifizierung des Messablaufs vorteilhaft berücksichtigt.

In einem dritten Speicherbereich sind Zahlenwerte 38 abgespeichert, die dimensionelle Ist-Eigenschaften eines Referenzmessobjekts 39 repräsentieren. Das Referenzmessobjekt 39 ist vorzugsweise ein "Masterstück", das beispielsweise auf einem hochgenauen Referenzmessgerät unter Laborbedingungen gemessen wurde. Die dabei erhaltenen Zahlenwerte 38 dienen in einigen Ausführungsbeispielen dazu, einen optimierten Messablauf für die Messung mit dem Koordinatenmessgerät 12 zu erstellen, indem insbesondere die Bewegungsparameter des Messkopfes 16 relativ zu dem Messobjekt auf der Werkstückaufnahme 14 so gewählt werden, dass die jeweiligen Abweichungen zu den Referenzwerten 38 minimiert sind.

In einigen Ausführungsbeispielen sind die Zahlenwerte 38 an einem typgleichen Messobjekt 39 mit einem Koordinatenmessgerät eines anderen Typs und/oder mit einem anderen Sensor bestimmt. Die Berücksichtigung der Zahlenwerte 38 bei der Erstellung des modifizierten zweiten Messablaufs führt zu einer guten Vergleichbarkeit der Messergebnisse.

In den bevorzugten Ausführungsbeispielen kann ein Bediener einen definierten Messablauf 40 zum Messen eines Messobjekts 32 mithilfe der Darstellung auf dem Bildanzeigegerät erstellen und an die Steuereinheit 26 übertragen, was hier durch eine Datenverbindung 42 angedeutet ist. Der Messablauf 40 repräsentiert die Vielzahl von Steuerbefehlen, die die Steuereinheit 26 dazu veranlassen, den Messkopf 16 relativ zu der Werkstückaufnahme 14 zu verfahren und individuelle Messwerte aufzunehmen. Mit Hilfe der Messwerte quantifiziert die Auswerteeinheit 28 selektierte Prüfmerkmale für das individuelle Messobjekt.

Fig. 2 zeigt die Darstellung 32a des Messobjekts 32, das eine Vielzahl von Geometrieelementen besitzt. Beispielhaft sind hier einige Geometrieelemente mit den Bezugsziffern 46, 48, 50, 52 bezeichnet. Die Geometrieelemente 46, 48 sind beispielsweise zylindrische Bohrungen, während das Geometrieelement 50 ein oktagonaler Zapfen ist, der aus der Betrachtungsebene vertikal heraussteht. Das Geometrieelement 52 ist beispielsweise eine ovale Vertiefung in der Oberfläche des hier nur schematisch und beispielhaft dargestellten Messobjekts.

Die Darstellung 32a wird auf dem Bildanzeigegerät 30 angezeigt. Der Bediener der Vorrichtung 10 kann nun in der nachfolgend beschriebenen Weise einzelne Geometrieelemente selektieren, um den Messablauf 40 mithilfe der Auswerteeinheit 28 automatisch erstellen zu lassen.

Fig. 3 zeigt eine Darstellung 32b, die der Darstellung 32a aus Fig. 2 entspricht. Allerdings hat der Bediener in der Darstellung 32b das Geometrieelement 46 mithilfe eines Mauszeigers 54 selektiert. In bevorzugten Ausführungsbeispielen wird ein selektiertes Geometrieelement optisch hervorgehoben, wie dies in Fig. 3 anhand des Geometrieelements 46' dargestellt ist. In einigen Ausführungsbeispielen kann die optische Hervorhebung durch eine farbige Markierung realisiert sein. Alternativ oder ergänzend kann der Bediener in einigen Ausführungsbeispielen eine Selektion über einen Touchscreen vornehmen, auf dem die Darstellung 32 angezeigt ist.

Zum Erstellen des Messablaufs bestimmt der Anwender Prüfmerkmale für ein selektiertes Geometrieelement 46'. In einigen Ausführungsbeispielen besitzt die Auswerteeinheit 28 daher die Fähigkeit, Kanten in der bildlichen Darstellung 32 eines Messobjekts zu detektieren, um Geometrieelemente des Messobjekts automatisch zu identifizieren. Anschließend sucht die Auswerteeinheit 28 in einer weiteren Datenbank nach vordefinierten Messelementen, deren Form dem identifizierten Geometrieelement entspricht. Sobald die Auswerteeinheit 28 ein passendes vordefiniertes Messelement identifiziert hat, wählt sie anhand der Datenbank die zugeordneten typischen Prüfmerkmale aus und zeigt diese in der bildlichen Darstellung für das selektierte Geometrieelement 46' grafisch an. In der beispielhaften Darstellung der Fig. 3 sind die geeigneten Prüfmerkmale der Durchmesser 56 der Bohrung sowie die x- und y-Position 58a, 58b der Bohrung relativ zu dem Koordinatensystem 24.

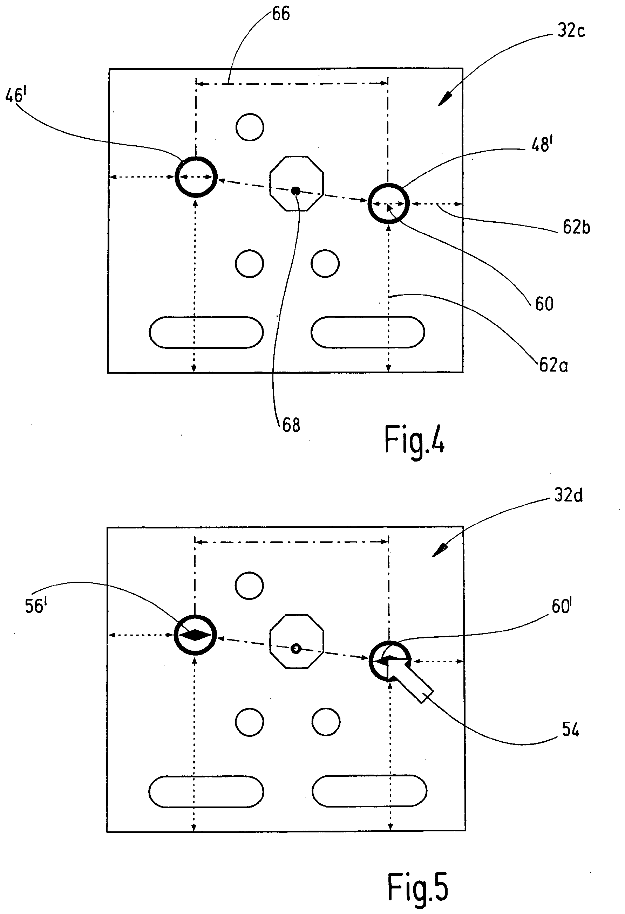

Fig. 4 zeigt eine weitere bildliche Darstellung 32c, die der Darstellung 32b aus Fig. 3 entspricht, allerdings nachdem der Bediener ein weiteres Geometrieelement 48' selektiert hat. Auch für das weitere selektierte Geometrieelement 48' zeigt die Auswerteeinheit 28 hier geeignete Prüfmerkmale 60, 62a und 62b an. Darüber hinaus zeigt die Auswerteeinheit 28 in den bevorzugten Ausführungsbeispielen geeignete Verknüpfungselemente für die zumindest zwei selektierten Geometrieelemente. Ein geeignetes Verknüpfungselement ist in diesem Ausführungsbeispiel der relative Abstand 64 der beiden selektierten Geometrieelemente 46', 48'. Ein weiteres geeignetes Verknüpfungselement ist hier beispielsweise der seitliche Versatz 66 der Mittelpunkte der beiden selektierten Geometrieelemente 46', 48'. Ein weiteres Verknüpfungselement kann der Symmetriepunkt 68 zwischen den beiden selektierten Geometrieelementen 46', 48' sein. Allgemein sind Verknüpfungselemente Merkmale des zu messenden Objekts, die eine räumliche Beziehung zwischen zwei oder mehr Geometrieelementen an dem Messobjekt repräsentieren.

In der bildlichen Darstellung in der Fig. 4 sind zwei Geometrieelemente 46', 48' des Messobjekts 32 selektiert und die Auswerteeinheit 28 bietet zu den selektierten Geometrieelementen 46', 48' geeignete Prüfmerkmale 56, 58, 60, 62 und Verknüpfungselemente 64, 66, 68 an. Fig. 5 zeigt demgegenüber eine bildliche Darstellung 32d, in der der Bediener mithilfe des Mauszeigers 54 die Prüfmerkmale 56' und 60' sowie das angebotene Verknüpfungselement 68' selektiert hat. In den bevorzugten Ausführungsbeispielen werden selektierte Prüfmerkmale und Verknüpfungselemente hervorgehoben, wie dies in Fig. 5 schematisch angedeutet ist. Mit der Selektion eines Prüfmerkmals und/oder Verknüpfungselements übernimmt die Auswerteeinheit 28 das selektierte Prüfmerkmal und/oder Verknüpfungselement in den Messablauf 40. Durch mehrfache Selektion kann der Bediener somit einen individuellen Messablauf für ein Messobjekt konfigurieren.

Die Erstellung des Messablaufs 40 erfolgt in den bevorzugten Ausführungsbeispielen nach Abschluss aller Selektionsschritte automatisch durch die Auswerteeinheit 28, indem die Auswerteeinheit 28 anhand der selektierten Prüfmerkmale und/oder Verknüpfungselemente die Steuerbefehle für die Steuereinheit 26 bestimmt. Anschließend überträgt die Auswerteeinheit 28 den Messablauf 40 an die Steuereinheit zur Aufnahme der individuellen Messwerte an den selektierten Geometrieelementen des Messobjekts. Die Auswerteeinheit 28 liest die aufgenommenen Messwerte von der Steuereinheit 26 ein und bestimmt in Abhängigkeit von diesen Messwerten Zahlenwerte für alle selektierten Prüfmerkmale und/oder Verknüpfungselemente, wobei jeder dieser Zahlenwerte eine dimensionelle Eigenschaft des Messobjekts repräsentiert, die dem jeweiligen Prüfmerkmal und/oder Verknüpfungselement entspricht.

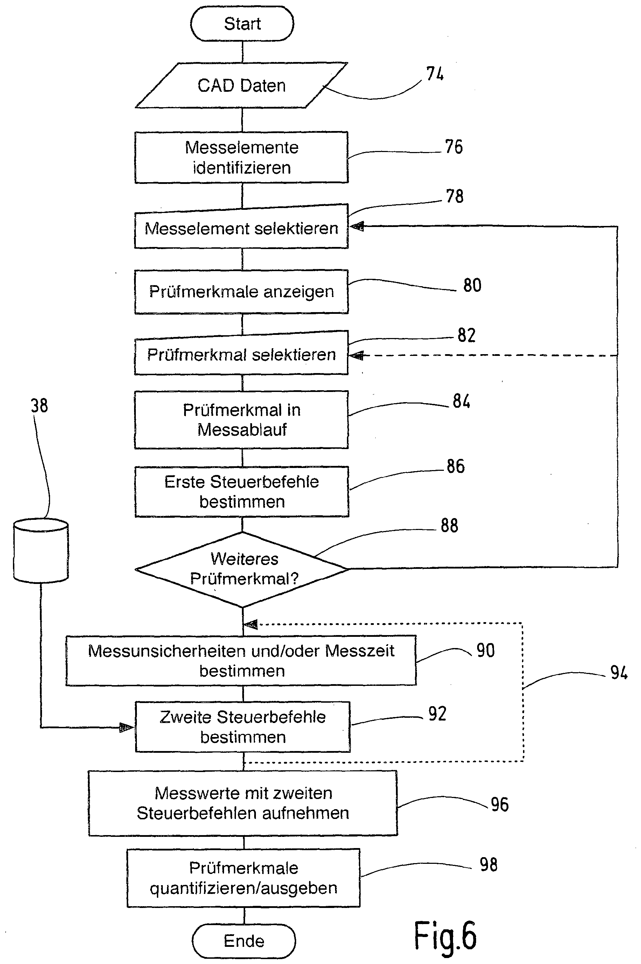

In dem Ausführungsbeispiel gemäß Fig. 6 werden im Schritt 74 die CAD-Daten des zu vermessenden Objekts bereitgestellt, beispielsweise indem die CAD-Daten über die Schnittstelle 33 in den Speicher 34 geladen werden. Gemäß Schritt 76 werden anschließend zu messende Geometrieelemente (Messelemente) anhand der CAD-Daten identifiziert. In einigen Ausführungsbeispielen geschieht dies durch den Anwender. In anderen Ausführungsbeispielen kann die Auswerteeinheit 28 dazu ausgebildet sein, geeignete Messelemente anhand der CAD-Daten automatisch zu identifizieren und dem Anwender zur Auswahl anzubieten.

Gemäß Schritt 78 selektiert der Anwender zum Erstellen des Messablaufs ein erstes zu messendes Geometrieelement (Messelement). In bevorzugten Ausführungsbeispielen zeigt die Auswerteeinheit 28 geeignete Prüfmerkmale zu dem selektierten Messelement an (Schritt 80). Gemäß Schritt 82 selektiert der Anwender ein gewünschtes Prüfmerkmal und dieses wird gemäß Schritt 84 in den Messablauf übernommen. Mit der Übernahme in den Messablauf bestimmt die Auswerteeinheit 28 erste (provisorische) Steuerbefehle zum Steuern des Messkopfes 16 relativ zu dem Messobjekt auf der Werkstückaufnahme 14. Anschließend erfolgt gemäß Schritt 88 eine Entscheidung, ob weitere Messelemente und/oder Prüfmerkmale selektiert werden sollen.

Gemäß Schritt 90 werden nun die Messunsicherheiten für alle selektierten Prüfmerkmale bestimmt, wobei vorzugsweise das Softwaretool Virtual CMM von der PTB verwendet wird. Ergänzend kann eine Messzeit basierend auf den ersten Steuerbefehlen ermittelt werden, insbesondere mit einer computerunterstützten Simulation unter Verwendung der Auswerte- und Steuereinheit 26, 28. In einigen bevorzugten Ausführungsbeispielen wird eine Differenz zwischen der ermittelten Messzeit und einer definierten, vom Anwender vorgegebenen Zielzeit bestimmt, die in dem Speicher 38 der Auswerteeinheit 28 gespeichert ist.

Gemäß Schritt 92 werden anschließend in Abhängigkeit von den erhaltenen Messunsicherheiten und der ersten Messzeit bzw. der Differenz zweite Steuerbefehle bestimmt, die gegenüber den ersten Steuerbefehlen aus dem Schritt 86 zumindest teilweise modifiziert sind. In den bevorzugten Ausführungsbeispielen führen die zweiten Steuerbefehle zumindest an einigen Stellen des automatisierten Messablaufs zu einem veränderten Bewegungsverhalten des Messkopfes 16, insbesondere zu einer modifizierten Bewegungsgeschwindigkeit und/oder Bewegungsbahn. In einigen Ausführungsbeispielen können die modifizierten (zweiten) Steuerbefehle einen Sensorwechsel und/oder einen Wechsel des Tastersystems beinhalten. Gemäß der Schleife 94 kann die Bestimmung der Messunsicherheiten und die Bestimmung von modifizierten Steuerbefehlen iterativ wiederholt werden.

Nach Abschluss der Iterationsschleifen 94 ist der modifizierte (zweite) Messablauf fertig gestellt und er kann über die Datenverbindung 42 an die Steuereinheit 26 übertragen werden. Gemäß Schritt 96 nimmt die Steuereinheit 26 die Messwerte auf Basis der zweiten Steuerbefehle auf und stellt diese anschließend der Auswerteeinheit 28 zur Auswertung zur Verfügung. Gemäß Schritt 98 werden die Prüfmerkmale in Abhängigkeit von den aufgenommenen Messwerten quantifiziert und beispielsweise auf dem Bildanzeigegerät 30 ausgegeben.

In einigen bevorzugten Ausführungsbeispielen zeigt die Auswerteeinheit 28 dem Anwender beim Erstellen des (modifizierten) Messablaufs eine begrenzte Anzahl an Variationsmöglichkeiten an, um die definierte Messunsicherheit für ein selektiertes Prüfmerkmals auf den gewünschten Wert relativ zu den akzeptablen Fertigungstoleranzen zu bringen. In einigen Varianten zeigt die Auswerteeinheit 28 dem Anwender jeweils diejenigen Variationsmöglichkeiten an, beispielsweise jeweils drei, die die größten Auswirkungen auf die Messunsicherheit haben. Der Anwender kann dann mit Hilfe der Auswerteeinheit 28 die Modifikation an dem Messablauf vornehmen, indem er beispielsweise von der Auswerteeinheit 28 vorgeschlagene Modifikationen bestätigt. Besonders vorteilhaft, wenn auch ungewöhnlich, beinhaltet das neue Verfahren, dass für zumindest ein Geometrieelement modifizierte zweite Steuerbefehle bestimmt werden, die zu einer Erhöhung der Messunsicherheit für das entsprechende Geometrieelement führen. Dies geschieht vorteilhaft bei allen Geometrieelementen, bei denen die akzeptablen Fertigungstoleranzen besonders hoch sind im Vergleich zu den akzeptablen Fertigungstoleranzen von anderen Geometrieelementen und/oder Prüfmerkmalen.

Insgesamt beinhalten das neue Verfahren und die entsprechende Vorrichtung in den bevorzugten Ausführungsbeispielen somit eine rechnergestützte Optimierung eines Messablaufs, wobei die erreichbaren Messunsicherheiten als maßgebliches Optimierungskriterium verwendet werden. Im Rahmen der Optimierung werden insbesondere Bewegungsparameter für die Bewegungen des Messkopfes relativ zu der Werkstückaufnahme für das Messobjekt und/oder Eigenschaften des verwendeten Sensors modifiziert. Vorteilhaft beinhaltet die Auswerteeinheit 28 ein Softwaretool zur Spracheingabe, so dass der Anwender die Modifikationen per Spracheingabe vornehmen und/oder bestätigen kann.

## Patentansprüche

1. Verfahren zum Bestimmen von dimensionellen Ist-Eigenschaften eines Messobjekts (32), das eine Vielzahl von Geometrieelementen (46, 48, 50, 52) besitzt, mit den Schritten:
- Bereitstellen eines Koordinatenmessgerätes (12) mit einem Messkopf (16) zum Aufnehmen von Messwerten, die eine Position von zumindest einem Messpunkt an dem Messobjekt (32) repräsentieren,
- Bereitstellen von Solldaten (34), die Soll-Eigenschaften für die Vielzahl von Geometrieelementen (46, 48, 50, 52) des Messobjekts (32) repräsentieren, wobei die Solleigenschaften akzeptable Fertigungstoleranzen für die Geometrieelemente beinhalten,
- computerunterstütztes Erstellen (78 - 88) eines Messablaufs (40), der Bewegungen des Messkopfes (16) relativ zu dem Messobjekt (32) und die Aufnahme von Messwerten an definierten Messkopfpositionen relativ zu dem Messobjekt (32) festlegt, wobei definierte Geometrieelemente aus der Vielzahl von Geometrieelementen (46, 48, 50, 52) ausgewählt und Prüfmerkmale (56, 58, 60, 62, 64) zu den definierten Geometrieelementen in Abhängigkeit von den Solldaten festgelegt werden, und wobei Steuerbefehle zum Steuern des Messkopfes (16) relativ zu den definierten Geometrieelementen in Abhängigkeit von den Prüfmerkmalen (56, 58, 60, 62, 64) festgelegt werden,
- Aufnehmen (96) von individuellen Messwerten an dem Messobjekt (32) mit Hilfe des Messkopfes (16), wobei der Messkopf (16) in Abhängigkeit von den Steuerbefehlen gesteuert wird, und
- Bestimmen (98) von Zahlenwerten in Abhängigkeit von den individuellen Messwerten, wobei die Zahlenwerte dimensionelle Ist-Eigenschaften des Messobjekts (32) repräsentieren, die den Prüfmerkmalen (56, 58, 60, 62, 64) entsprechen,
wobei zunächst ein erster Messablauf computerunterstützt erstellt wird, der erste Steuerbefehle festlegt (86), und wobei der erste Messablauf vor dem Aufnehmen der individuellen Messwerte computerunterstützt modifiziert wird, um einen zweiten Messablauf mit zweiten Steuerbefehlen zu erhalten (92), wobei sich die zweiten Steuerbefehle zumindest teilweise von den ersten Steuerbefehlen unterscheiden, wobei der Messkopf (16) zum Aufnehmen der individuellen Messwerte in Abhängigkeit von den zweiten Steuerbefehlen gesteuert wird (96), **dadurch gekennzeichnet, dass** die zweiten Steuerbefehle computerunterstützt so gewählt werden, dass die Zahlenwerte jeweils eine definierte Messunsicherheit aufweisen, die um einen definierten Betrag kleiner ist als die akzeptablen Fertigungstoleranzen für die Geometrieelemente, wobei die definierte Messunsicherheit in Abhängigkeit von den ersten Steuerbefehlen ermittelt wird (90), wobei der erste Messablauf in Abhängigkeit von der ermittelten Messunsicherheit modifiziert wird (92), und wobei die zweiten Steuerbefehle so gewählt werden, dass die definierte Messunsicherheit für zumindest eines der Prüfmerkmale (56, 58, 60, 62, 64) erhöht wird, während die definierte Messunsicherheit für zumindest ein anderes Prüfmerkmal beibehalten oder verringert wird.

2. Verfahren nach Anspruch 1, **dadurch gekennzeichnet, dass** die zweiten Steuerbefehle computerunterstützt so gewählt werden, dass die Zahlenwerte jeweils eine definierte Messunsicherheit aufweisen, welche zwischen 10% und 50% der akzeptablen Fertigungstoleranzen ist.

3. Verfahren nach Anspruch 1 oder 2, **dadurch gekennzeichnet, dass** die zweiten Steuerbefehle anhand von mehreren Iterationsschritten bestimmt werden (94).

4. Verfahren nach einem der Ansprüche 1 bis 3, **dadurch gekennzeichnet, dass** die zweiten Steuerbefehle bestimmt werden (92), nachdem der erste Messablauf vollständig fertig gestellt wurde.

5. Verfahren nach einem der Ansprüche 1 bis 3, **dadurch gekennzeichnet, dass** die zweiten Steuerbefehle bestimmt werden (92), bevor der erste Messablauf vollständig fertig gestellt ist.

6. Verfahren nach einem der Ansprüche 1 bis 5, **dadurch gekennzeichnet, dass** die ersten und zweiten Steuerbefehle jeweils Bewegungsparameter des Messkopfes (16) relativ zu dem Messobjekt (32) festlegen.

7. Verfahren nach einem der Ansprüche 1 bis 6, **dadurch gekennzeichnet, dass** eine erste Datenbank bereitgestellt wird, in der Geräteeigenschaften (36) des Koordinatenmessgerätes (12) hinterlegt sind, wobei die zweiten Steuerbefehle in Abhängigkeit von den Geräteeigenschaften bestimmt werden.

8. Verfahren nach einem der Ansprüche 1 bis 7, **dadurch gekennzeichnet, dass** eine zweite Datenbank bereitgestellt wird, in der weitere Zahlenwerte (38) hinterlegt sind, die dimensionelle Ist-Eigenschaften eines Referenzmessobjekts (39) repräsentieren, wobei die zweiten Steuerbefehle in Abhängigkeit von den weiteren Zahlenwerten bestimmt werden.

9. Verfahren nach einem der Ansprüche 1 bis 8, **dadurch gekennzeichnet, dass** der Messkopf (16) zum Aufnehmen der Messwerte mit einer definierten Sensoranordnung (20, 22) bestückt wird, die in Abhängigkeit von der definierten Messunsicherheit bestimmt wird.

10. Verfahren nach einem der Ansprüche 1 bis 9, **dadurch gekennzeichnet, dass** die zweiten Steuerbefehle ferner so gewählt werden, dass der zweite Messablauf eine definierte Messzeit bewirkt.

11. Verfahren nach einem der Ansprüche 1 bis 10, **dadurch gekennzeichnet, dass** die zweiten Steuerbefehle ferner in Abhängigkeit von einer individuellen Nutzerfreigabe gewählt werden.

12. Verfahren nach einem der Ansprüche 1 bis 11, **dadurch gekennzeichnet, dass** der erste und/oder zweite Messablauf mit Hilfe von Spracheingaben erstellt werden.

13. Vorrichtung zum Bestimmen von dimensionellen Ist-Eigenschaften eines Messobjekts (32), das eine Vielzahl von Geometrieelementen (46, 48, 50, 52) besitzt, mit einer Werkstückaufnahme (14) zum Halten des Messobjekts (32), mit einem Messkopf (16), der relativ zu der Werkstückaufnahme (14) verfahrbar ist und zum Aufnehmen von Messwerten ausgebildet ist, die eine Position von zumindest einem Messpunkt an dem Messobjekt (32) repräsentieren, mit einer Auswerte- und Steuereinheit (26, 28), die den Messkopf (16) in Abhängigkeit von einem definierten Messablauf (40) relativ zu der Werkstückaufnahme (14) verfährt, und mit einer Schnittstelle (33) zum Zuführen von Solldaten, die Soll-Eigenschaften für die Vielzahl von Geometrieelementen (46, 48, 50, 52) des Messobjekts (32) repräsentieren, wobei die Solleigenschaften akzeptable Fertigungstoleranzen für die Geometrieelemente beinhalten, wobei die Auswerte- und Steuereinheit (26, 28) dazu ausgebildet ist, ein computerunterstütztes Erstellen eines Messablaufs zu ermöglichen, der Bewegungen des Messkopfes (16) relativ zu dem Messobjekt (32) und die Aufnahme von Messwerten an definierten Messkopfpositionen relativ zu dem Messobjekt (32) festlegt, wobei definierte Geometrieelemente aus der Vielzahl von Geometrieelementen (46, 48, 50, 52) ausgewählt und Prüfmerkmale (56, 58, 60, 62, 64) zu den definierten Geometrieelementen in Abhängigkeit von den Solldaten festgelegt werden können, und wobei Steuerbefehle zum Steuern des Messkopfes (16) relativ zu den definierten Geometrieelementen in Abhängigkeit von den Prüfmerkmalen (56, 58, 60, 62, 64) festgelegt werden können, wobei die Auswerte- und Steuereinheit (26, 28) ferner dazu ausgebildet ist, den Messkopf (16) in Abhängigkeit von den Steuerbefehlen zu steuern, um individuelle Messwerte an dem Messobjekt (32) aufzunehmen, und Zahlenwerte in Abhängigkeit von den individuellen Messwerten zu bestimmen, wobei die Zahlenwerte dimensionelle Ist-Eigenschaften des Messobjekts (32) repräsentieren, die den Prüfmerkmalen (56, 58, 60, 62, 64) entsprechen, wobei die Auswerte- und Steuereinheit (26, 28) ferner dazu ausgebildet ist, zunächst einen ersten Messablauf zu erstellen, der erste Steuerbefehle zum Steuern des Messkopfes (16) relativ zu dem Messobjekt (32) festgelegt, und den ersten Messablauf vor dem Aufnehmen der individuellen Messwerte zu modifizieren, um einen zweiten Messablauf mit zweiten Steuerbefehlen zu erhalten, wobei sich die zweiten Steuerbefehle zumindest teilweise von den ersten Steuerbefehlen unterscheiden, wobei die Auswerte- und Steuereinheit (26, 28) dazu ausgebildet ist, den Messkopf (16) zum Aufnehmen der individuellen Messwerte in Abhängigkeit von den zweiten Steuerbefehlen zu steuern, **dadurch gekennzeichnet, dass** die zweiten Steuerbefehle so gewählt sind, dass die Zahlenwerte jeweils eine definierte Messunsicherheit aufweisen, die um einen definierten Betrag kleiner ist als die akzeptablen Fertigungstoleranzen für die Geometrieelemente, wobei die Auswerte- und Steuereinheit (26, 28) dazu ausgebildet ist, die definierte Messunsicherheit in Abhängigkeit von den ersten Steuerbefehlen zu ermitteln (90) und den ersten Messablauf in Abhängigkeit von der ermittelten Messunsicherheit zu modifizieren, wobei die zweiten Steuerbefehle computerunterstützt so gewählt sind, dass die definierte Messunsicherheit für zumindest eines der Prüfmerkmale (56, 58, 60, 62, 64) erhöht ist, während die definierte Messunsicherheit für zumindest ein anderes Prüfmerkmal beibehalten oder verringert ist.

14. Computerprogrammprodukt mit Programmcode, der dazu ausgebildet ist, ein Verfahren nach einem der Ansprüche 1 bis 12 mit allen Schritten mit Ausnahme des Schrittes Bereitstellen eines Koordinatenmessgerätes auszuführen, wenn der Programmcode auf einer Auswerte- und Steuereinheit eines Koordinatenmessgerätes ausgeführt wird.

## Claims

1. Method for determining actual dimensional properties of a measured object (32) having a multiplicity of geometric elements (46, 48, 50, 52), said method comprising the following steps:
- providing a coordinate measuring machine (12) having a measuring head (16) for recording measurement values representing a position of at least one measurement point on the measured object (32),
- providing intended data (34) representing intended properties for the multiplicity of geometric elements (46, 48, 50, 52) of the measured object (32), wherein the intended properties contain acceptable manufacturing tolerances for the geometric elements,
- creating (78-88) a measurement sequence (40) with the aid of a computer, said measurement sequence setting movements of the measuring head (16) relative to the measured object (32) and recording measurement values at defined measuring head positions relative to the measured object (32), wherein defined geometric elements are selected from the multiplicity of geometric elements (46, 48, 50, 52) and test features (56, 58, 60, 62, 64) relating to the defined geometric elements are set depending on the intended data, and wherein control commands for controlling the measuring head (16) relative to the defined geometric elements are set depending on the test features (56, 58, 60, 62, 64),
- recording (96) individual measurement values on the measured object (32) with the aid of the measuring head (16), wherein the measuring head (16) is controlled depending on the control commands, and
- determining (98) numerical values depending on the individual measurement values, wherein the numerical values represent actual dimensional properties of the measured object (32) which correspond to the test features (56, 58, 60, 62, 64),
wherein a first measurement sequence is created first with the aid of a computer, said measurement sequence setting (86) first control commands, and wherein the first measurement sequence is modified with the aid of a computer before recording the individual measurement values in order to obtain (92) a second measurement sequence with second control commands, wherein the second control commands at least partially differ from the first control commands, wherein the measuring head (16) for recording the individual measurement values is controlled (96) depending on the second control commands, **characterized in that** the second control commands are selected with the aid of a computer in such a way that the numerical values each have a defined measurement uncertainty which is smaller by a defined absolute value than the acceptable manufacturing tolerances for the geometric elements, wherein the defined measurement uncertainty is ascertained (90) depending on the first control commands, wherein the first measurement sequence is modified (92) depending on the ascertained measurement uncertainty, and wherein the second control commands are selected in such a way that the defined measurement uncertainty is increased for at least one of the test features (56, 58, 60, 62, 64) while the defined measurement uncertainty for at least one other test feature is maintained or reduced..

2. Method according to Claim 1, **characterized in that** the second control commands are selected with the aid of a computer in such a way that the numerical values each have a defined measurement uncertainty which is between 10% and 50% of the acceptable manufacturing tolerances.

3. Method according to Claim 1 or 2, **characterized in that** the second control commands are determined (94) on the basis of a plurality of iteration steps.

4. Method according to any one of Claims 1 to 3, **characterized in that** the second control commands are determined (92) after the first measurement sequence was fully completed.

5. Method according to any one of Claims 1 to 3, **characterized in that** the second control commands are determined (92) before the first measurement sequence has been fully completed.

6. Method according to any one of Claims 1 to 5, **characterized in that** the first control commands and second control commands respectively set movement parameters of the measuring head (16) relative to the measured object (32).

7. Method according to any one of Claims 1 to 6, **characterized in that** a first database is provided, in which machine properties (36) of the coordinate measuring machine (12) are stored, wherein the second control commands are determined depending on the machine properties.

8. Method according to any one of Claims 1 to 7, **characterized in that** a second database is provided, in which further numerical values (38) which represent actual dimensional properties of a reference measured object (39) are stored, wherein the second control commands are determined depending on the further numerical values.

9. Method according to any one of Claims 1 to 8, **characterized in that** the measuring head (16) for recording the measurement values is equipped with a defined sensor arrangement (20, 22) which is determined depending on the defined measurement uncertainty.

10. Method according to any one of Claims 1 to 9, **characterized in that** the second control commands are further selected in such a way that the second measurement sequence causes a defined measurement time.

11. Method according to any one of Claims 1 to 10, **characterized in that** the second control commands are further selected depending on an individual user approval.

12. Method according to any one of Claims 1 to 11, **characterized in that** the first measurement sequence and/or second measurement sequence are created with the aid of speech input.

13. Device for determining actual dimensional properties of a measured object (32) having a multiplicity of geometric elements (46, 48, 50, 52), said device comprising a workpiece receptacle (14) for holding the measured object (32), comprising a measuring head (16) that is displaceable relative to the workpiece receptacle (14) and embodied to record measurement values that represent a position of at least one measurement point on the measured object (32), comprising an evaluation and control unit (26, 28) that displaces the measuring head (16) relative to the workpiece receptacle (14) depending on a defined measurement sequence (40), and comprising an interface (33) for supplying intended data that represent intended properties for the multiplicity of geometric elements (46, 48, 50, 52) of the measured object (32), wherein the intended properties contain acceptable manufacturing tolerances for the geometric elements, wherein the evaluation and control unit (26, 28) is embodied to facilitate a computer-based creation of a measurement sequence which sets movements of the measuring head (16) relative to the measured object (32) and the recording of measurement values at defined measuring head positions relative to the measured object (32), wherein defined geometric elements can be selected from the multiplicity of geometric elements (46, 48, 50, 52) and test features (56, 58, 60, 62, 64) relating to the defined geometric elements can be set depending on the intended data, and wherein control commands for controlling the measuring head (16) relative to the defined geometric elements can be set depending on the test features (56, 58, 60, 62, 64), wherein the evaluation and control unit (26, 28) is further embodied to control the measuring head (16) depending on the control commands in order to record individual measurement values on the measured object (32) and determine numerical values depending on the individual measurement values, wherein the numerical values represent actual dimensional properties, which correspond to the test features (56, 58, 60, 62, 64), of the measured object (32), wherein the evaluation and control unit (26, 28) is further embodied to create a first measurement sequence, which sets first control commands for controlling the measuring head (16) relative to the measured object (32), first and modify the first measurement sequence before recording the individual measurement values in order to obtain a second measurement sequence with second control commands, wherein the second control commands at least partly differ from the first control commands, wherein the evaluation and control unit (26, 28) is embodied to control the measuring head (16) for recording the individual measurement values depending on the second control commands, **characterized in that** the second control commands are selected in such a way that the numerical values each have a defined measurement uncertainty which is smaller by a defined absolute value than the acceptable manufacturing tolerances for the geometric elements, wherein the evaluation and control unit (26, 28) is embodied to ascertain (90) the defined measurement uncertainty depending on the first control commands and to modify the first measurement sequence depending on the ascertained measurement uncertainty, wherein the second control commands are selected with the aid of a computer in such a way that the defined measurement uncertainty for at least one of the test features (56, 58, 60, 62, 64) is increased while the defined measurement uncertainty for at least one other test feature is maintained or reduced.

14. Computer program product comprising program code configured to carry out a method according to any of Claims 1 to 12 with all steps with the exception of the step of providing a coordinate measuring machine when the program code is executed on an evaluation and control unit of a coordinate measuring machine.

## Revendications

1. Procédé, destiné à déterminer des propriétés dimensionnelles réelles d'un objet à mesurer (32), qui détient une pluralité d'éléments géométriques (46, 48, 50, 52), comportant les étapes consistant à :
- mettre à disposition un appareil de mesure de coordonnées (12) pourvu d'une tête de mesure (16), pour relever des valeurs de mesure, qui représentent une position d'au moins un point de mesure sur l'objet à mesurer (32),
- mettre à disposition des données de consigne (34) qui représentent des propriétés de consigne pour la pluralité d'éléments géométriques (46, 48, 50, 52) de l'objet à mesurer (32), les propriétés de consigne contenant des tolérances de fabrication acceptables pour les éléments géométriques,
- établir de manière assistée par ordinateur (78 à 88) une séquence de mesure (40) qui détermine des déplacements de la tête de mesure (16) par rapport à l'objet à mesurer (32) et le relevé de valeurs de mesure sur des positions définies de la tête de mesure par rapport à l'objet à mesurer (32), des éléments géométriques définis étant sélectionnés parmi la pluralité d'éléments géométriques (46, 48, 50, 52) et des caractéristiques d'essai (56, 58, 60, 62, 64) concernant les éléments géométriques définis étant fixées en fonction des données de consigne et des instructions de commande étant fixées pour commander la tête de mesure (16) par rapport aux éléments géométriques définis en fonction des caractéristiques d'essai (56, 58, 60, 62, 64),
- relever (96) des valeurs de mesure individuelles sur l'objet à mesurer (32) à l'aide de la tête de mesure (16), la tête de mesure (16) étant commandée en fonction des instructions de commande, et
- déterminer (98) des valeurs chiffrées en fonction des valeurs de mesure individuelles, les valeurs chiffrées représentant des propriétés dimensionnelles réelles de l'objet à mesurer (32) qui correspondent aux caractéristiques d'essai (56, 58, 60, 62, 64),
d'abord une première séquence de mesure étant établie de manière assistée par ordinateur, laquelle fixe (86) des premières instructions de commande et la première séquence de mesure étant modifiée de manière assistée par ordinateur avant le relevé des valeurs de mesure individuelles, pour obtenir (92) une deuxième séquence de mesure avec des deuxièmes instructions de commande, les deuxièmes instructions de commande se différenciant au moins partiellement des premières instructions de commande, la tête de mesure (16) étant commandée (96) pour relever les valeurs de mesure individuelles en fonction des deuxièmes instructions de commande, **caractérisé en ce que** les deuxièmes instructions de commande sont sélectionnées de manière assistée par ordinateur de telle sorte que les valeurs chiffrées présentent respectivement une incertitude de mesure définie, qui est inférieure d'une valeur définie aux tolérances de fabrication acceptables pour les éléments géométriques, l'incertitude de mesure définie étant déterminée (90) en fonction des premières instructions de commande, la première séquence de mesure étant modifiée (92) en fonction de l'incertitude de mesure déterminée et les deuxièmes instructions de commande étant sélectionnées de telle sorte que l'incertitude de mesure définie soit augmentée pour au moins l'une des caractéristiques d'essai (56, 58, 60, 62, 64), alors que l'incertitude de mesure définie est conservée ou réduite pour au moins une autre caractéristique d'essai.

2. Procédé selon la revendication 1, **caractérisé en ce que** les deuxièmes instructions de commande sont sélectionnées de manière assistée par ordinateur de telle sorte que les valeurs chiffrées présentent au moins une incertitude de mesure définie qui se situe entre 10 % et 50 % des tolérances de fabrication acceptables.

3. Procédé selon la revendication 1 ou 2, **caractérisé en ce que** les deuxièmes instructions de commande sont déterminées (94) à l'aide de plusieurs étapes d'itération.

4. Procédé selon l'une quelconque des revendications 1 à 3, **caractérisé en ce que** les deuxièmes instructions de commande sont déterminées (92), après l'achèvement total de la première séquence de mesure.

5. Procédé selon l'une quelconque des revendications 1 à 3, **caractérisé en ce que** les deuxièmes instructions de commande sont déterminées (92), avant que la première séquence de mesure soit totalement achevée.

6. Procédé selon l'une quelconque des revendications 1 à 5, **caractérisé en ce que** les premières et deuxièmes instructions de commande fixent respectivement des paramètres de déplacement de la tête de mesure (16) par rapport à l'objet à mesurer (32).

7. Procédé selon l'une quelconque des revendications 1 à 6, **caractérisé en ce qu'**une première base de données est mise à disposition dans laquelle sont sauvegardées des propriétés d'appareil (36) de l'appareil de mesure de coordonnées (12), les deuxièmes instructions de commande étant déterminées en fonction des propriétés d'appareil.

8. Procédé selon l'une quelconque des revendications 1 à 7, **caractérisé en ce qu'**une deuxième base de données est mise à disposition dans laquelle sont sauvegardées d'autres valeurs chiffrées (38) qui représentent des propriétés dimensionnelles réelles d'un objet à mesurer de référence (39), les deuxièmes instructions de commande étant déterminées en fonction des autres valeurs chiffrées.

9. Procédé selon l'une quelconque des revendications 1 à 8, **caractérisé en ce que** pour relever des valeurs de mesure, la tête de mesure (16) est équipée d'une configuration de capteurs (20, 22) définie, qui est déterminée en fonction de l'incertitude de mesure définie.

10. Procédé selon l'une quelconque des revendications 1 à 9, **caractérisé en ce que** les deuxièmes instructions de commande sont sélectionnées par ailleurs de telle sorte que la deuxième séquence de mesure donne lieu à un temps de mesure défini.

11. Procédé selon l'une quelconque des revendications 1 à 10, **caractérisé en ce que** les deuxièmes instructions de commande sont sélectionnées par ailleurs en fonction d'une validation individuelle par l'utilisateur.

12. Procédé selon l'une quelconque des revendications 1 à 11, **caractérisé en ce que** la première et/ou la deuxième séquence de mesure sont établies à l'aide de saisies vocales.

13. Dispositif destiné à déterminer des propriétés dimensionnelles réelles d'un objet à mesurer (32) qui détient une pluralité d'éléments géométriques (46, 48, 50, 52), pourvu d'un logement de pièce à usiner (14) destiné à maintenir l'objet à mesurer (32), d'une tête de mesure (16), qui est déplaçable par rapport au logement de pièce à usiner (14) et qui est conçue pour relever des valeurs de mesure qui représentent une position d'au moins un point de mesure sur l'objet à mesurer (32), pourvu d'une unité d'évaluation et de commande (26, 28), qui déplace la tête de mesure (16) en fonction d'une séquence de mesure (40) définie par rapport au logement de pièce à usiner (14) et pourvu d'une interface (33) destinée à fournir des données de consigne qui représentent des propriétés de consigne pour la pluralité d'éléments géométriques (46, 48, 50, 52) de l'objet à mesurer (32), les propriétés de consigne contenant des tolérances de fabrication acceptables pour les éléments géométriques, l'unité d'évaluation et de commande (26, 28) étant conçue pour permettre un établissement assisté par ordinateur d'une séquence de mesure qui détermine des déplacements de la tête de mesure (16) par rapport à l'objet à mesurer (32) et le relevé de valeurs de mesure sur des positions définies de la tête de mesure par rapport à l'objet à mesurer (32), des éléments géométriques définis étant sélectionnés parmi la pluralité d'éléments géométriques (46, 48, 50, 52) et des caractéristiques d'essai (56, 58, 60, 62, 64) concernant les éléments géométriques définis pouvant être fixées en fonction des données de consigne, et des instructions de commande pouvant être fixées pour commander la tête de mesure (16) par rapport aux éléments géométriques définis en fonction des caractéristiques d'essai (56, 58, 60, 62, 64), l'unité d'évaluation et de commande (26, 28) étant conçue en outre pour commander la tête de mesure (16) en fonction des instructions de commande pour relever des valeurs de mesure individuelles sur l'objet à mesurer (32) et pour déterminer des valeurs chiffrées en fonction des valeurs de mesure individuelles, les valeurs chiffrées représentant des propriétés dimensionnelles réelles de l'objet à mesurer (32), qui correspondent aux caractéristiques d'essai (56, 58, 60, 62, 64), l'unité d'évaluation et de commande (26, 28) étant conçue par ailleurs pour établir d'abord une première séquence de mesure, qui fixe des premières instructions de commande pour commander la tête de mesure (16) par rapport à l'objet à mesurer (32) et pour modifier la première séquence de mesure avant de relever les valeurs de mesure individuelles pour obtenir une deuxième séquence de mesure avec des deuxièmes instructions de commande, les deuxièmes instructions de commande se différenciant au moins partiellement des premières instructions de commande, l'unité d'évaluation et de commande (26, 28) étant conçue pour commander la tête de mesure (16) pour relever les valeurs de mesure individuelles en fonction des deuxièmes instructions de commande, **caractérisé en ce que** les deuxièmes instructions de commande sont sélectionnées de telle sorte que les valeurs chiffrées présentent respectivement une incertitude de mesure définie, qui est inférieure d'une valeur définie aux tolérances de fabrication acceptables pour les éléments géométriques, l'unité d'évaluation et de commande (26, 28) étant conçue pour déterminer (90) l'incertitude de mesure définie en fonction des premières instructions de commande et pour modifier la première séquence de mesure en fonction de l'incertitude de mesure déterminée, les deuxièmes instructions de commande étant sélectionnées de manière assistée par ordinateur de telle sorte que l'incertitude de mesure définie soit augmentée pour au moins l'une des caractéristiques d'essai (56, 58, 60, 62, 64), alors que l'incertitude de mesure définie est conservée ou réduite pour au moins une autre caractéristique d'essai.

14. Produit de programme informatique pourvu d'un code programme, qui est conçu pour réaliser un procédé selon l'une quelconque des revendications 1 à 12, avec toutes les étapes à l'exception de l'étape de la mise à disposition d'un appareil de mesure de coordonnées, lorsque le code programme est exécuté sur une unité d'évaluation et de commande d'un appareil de mesure de coordonnées.
